# EUROPÄISCHE PATENTSCHRIFT

(11) **EP 2 933 145 B1**
(45) Veröffentlichungstag und Bekanntmachung des Hinweises auf die Patenterteilung: **06.05.2020**
(21) Anmeldenummer: 15000811.8
(22) Anmeldetag: 18.03.2015
(51) Int. Cl.: A41D 13/01, B60Q 1/26, G08B 5/00

(54) **SCHUTZBEKLEIDUNG FÜR EINEN MOTORRADFAHRER UND ANZEIGESYSTEM MIT SCHUTZBEKLEIDUNG UND MOTORRAD**
PROTECTIVE CLOTHING FOR A MOTORCYCLIST AND DISPLAY SYSTEM WITH PROTECTIVE CLOTHING AND MOTORCYCLE
VÊTEMENT DE PROTECTION POUR UN MOTARD ET SYSTÈME D'AFFICHAGE DOTÉ DE VÊTEMENT DE PROTECTION ET MOTO

(30) Priorität: 19.04.2014 DE 102014005835
(43) Veröffentlichungstag der Anmeldung: 21.10.2015
(73) Patentinhaber: AUDI AG, 85045 Ingolstadt (DE)
(72) Erfinder: Stadler, Manfred, DE - 86633 Neuburg (DE); Hahn, Mathias, DE - 85117 Eitensheim (DE)
(74) Vertreter: Thielmann, Frank

(56) Entgegenhaltungen:
- WO-A1-2012/151642
- DE-U1- 20 106 261
- DE-U1- 20 110 216
- DE-U1- 20 302 689
- US-A1- 2003 213 045

## Beschreibung

Die Erfindung betrifft eine Schutzbekleidung für einen Motorradfahrer gemäß dem Oberbegriff von Patentanspruch 1. Sie betrifft ferner ein Anzeigesystem mit einer solchen Schutzbekleidung und mit einem Motorrad.

Motorradfahrer sind im Straßenverkehr besonders gefährdet. Dafür gibt es vielfältige Gründe, unter anderem sind Motorradfahrer im Vergleich zu Autofahrern wesentlich exponierter und werden somit im Falle eines Unfalls eher verletzt als Autofahrer. Auch werden Motorradfahrer oftmals übersehen, sodass sie überproportional häufig in einen Unfall verwickelt werden. Um die Sicherheit von Motorradfahrern zu erhöhen, gibt es bereits eine Reihe von Ansätzen.

So schlägt beispielsweise die US 2003/0213045 A1 ein flexibles, mit einer Mehrzahl von Anzeigeelementen ausgestattetes Element für ein Bekleidungsstück vor. Zusätzlich ist dabei an dem Bekleidungsstück und an einem von dem Träger des Bekleidungsstückes geführten Kraftfahrzeug jeweils ein Modul vorgesehen, wobei mittels einer Kopplung dieser Module die Anzeigeelemente beispielsweise in Abhängigkeit von bestimmten Leuchtsignalen des Kraftfahrzeugs ebenfalls zum Leuchten gebracht werden können.

Die WO 2012/151642 A1 offenbart eine Signaleinrichtung für ein Kraftfahrzeug, mit einem Übertragungsmodul, welches fahrzeugseitig mit einer Lampenschaltung gekoppelt ist und über Signale mit einer entfernten Hilfsbeleuchtungseinheit kommunizieren kann. Die Hilfsbeleuchtungseinheit kann dabei Teil eines Sicherheitsbekleidungsstückes sein, welches eine induktiv wiederaufladbare Energieversorgungsseinrichtung aufweist.

Die DE 20 2010 004 047 U1 schlägt vor, ein Lichtmodul mit einem Gehäuse an einem Helm anzubringen. Dieses Lichtmodul verfügt über eine Stromquelle und kommuniziert mit einem Fahrzeugsystem eines Motorrads, um gemäß Signalen des Fahrzeugsystems Lichtsignale abzustrahlen.

Die DE 201 06 261 U1 offenbart einen Zweiradhelm mit einem optischen Warn- und Erkennungselement, welches eine elektrisch betriebene Signalleuchte aufweist. Bei der Signalleuchte kann es sich hier um eine Brems- oder eine Nebelschlussleuchte handeln.

Die DE 203 02 689 U1 beschreibt eine Bekleidung, an der eine Bremsleuchte angebracht bzw. eingearbeitet werden kann. Die Bremsleuchte besteht hier aus Leuchtdioden oder Birnen, die in einem wasserdichten Gehäuse untergebracht sind. Versorgt wird die Bremsleuchte von einer in der Bekleidung zur Verfügung gestellten Energiequelle.

Die DE 201 10 216 U1 offenbart ein rotes Leuchtband mit Stopplicht zum wahlweisen Befestigen an einer Motorradjacke oder einem Nierengurt. Das rote Leuchtband mit Stopplicht besteht aus mehreren Leuchtelementen, die auf flexiblem Material, wie beispielsweise Leder, Nylon, Cordura befestigt sind, wobei ein unterer Teil die Befestigungsmöglichkeiten trägt, beispielsweise ein Klettband oder Druckknöpfe.

Es ist Aufgabe der vorliegenden Erfindung, eine Schutzbekleidung für einen Motorradfahrer bereitzustellen, welche die Sicherheit des Motorradfahrers erhöht.

Diese Aufgabe wird durch den Gegenstand des unabhängigen Patentanspruchs gelöst. Vorteilhafte Ausführungsformen ergeben sich aus den abhängigen Patentansprüchen, der Beschreibung und den Figuren.

Eine erfindungsgemäße Schutzbekleidung für einen Motorradfahrer verfügt über zumindest eine Licht emittierende Leuchtfläche und eine erste Steuereinheit, die elektrisch mit der Leuchtfläche gekoppelt ist. Diese erste Steuereinheit ist zum Steuern der Leuchtfläche ausgelegt und verfügt über eine drahtlose Schnittstelle zur Kommunikation mit einer zweiten, an einem Motorrad angeordneten Steuereinheit. Dabei ist die erste Steuereinheit ausgelegt, Signale von der zweiten Steuereinheit zu empfangen, welche ein Synchronisieren einer Aktivität der Leuchtfläche mit einer Aktivität zumindest einer Leuchte des Motorrads ermöglichen, und die Leuchtfläche entsprechend den Signalen, und damit entsprechend der Aktivität zumindest einer Leuchte des Motorrades zu steuern. Um die Sicherheit des Motorradfahrers zu erhöhen, ist die Leuchtfläche reversibel verformbar ausgeführt. Sie passt sich also zerstörungsfrei einer Verformung der Schutzbekleidung an, insbesondere einer Verformung, wie sie sich im normalen, sturzfreien Gebrauch ereignet. Insbesondere ist die Leuchtfläche hier gehäusefrei ausgeführt. Dies hat den Vorteil, dass der Komfort des Motorradfahrers bei Tragen der Schutzbekleidung gesteigert wird und die Verletzungsgefahr im Falle eines Sturzes erheblich reduziert wird. Der Motorradfahrer kann nämlich so und vor allem bei einer gehäusefreien Ausführung durch die Leuchtfläche bei einem Sturz nicht verletzt werden. Die Elastizität der Leuchtfläche ermöglicht überdies einen Einsatz in verschiedenen Bereichen der Schutzbekleidung, was die Sicherheit weiter erhöht, da bei der Wahl des Bereiches, in welchem die Leuchtfläche angeordnet wird, nicht auf eine Steifigkeit der Leuchtfläche geachtet werden muss und sicherheitsrelevante Aspekte besser berücksichtigt werden können. Durch die Elastizität und zerstörungsfreie Verformbarkeit der Leuchtflächen sind auch besonders große Leuchtflächen möglich, sodass der Motorradfahrer besser gesehen wird.

Es ist vorgesehen, dass die Schutzbekleidung über zumindest eine weitere, drahtlose Schnittstelle verfügt, welche geeignet ist, einen elektrischen Versorgungsstrom zu übertragen und insbesondere die Leuchtfläche an eine Stromversorgung eines Motorrads zu koppeln. Dies hat den Vorteil, dass in der Schutzbekleidung keine Batterie erforderlich ist, von der somit auch keine Verletzungsgefahr im Falle eines Sturzes ausgehen kann. Alternativ kann als Zwischenspeicher jedoch zusätzlich eine Batterie vorhanden sein. In diesem Fall kann die Batterie jedoch kleiner ausgeführt sein als ohne die Schnittstelle zur Stromversorgung, wodurch Komfort und Sicherheit im Vergleich zu einer ausschließlichen Stromversorgung über eine Batterie erhöht sind. Auch können so auftretende Versorgungsschwankungen ausgeglichen werden. Eine drahtlose Schnittstelle zur Stromversorgung bringt hier einen besonderen Komfort mit sich, außerdem ist der Motorradfahrer im Falle eines Sturzes nicht physisch mit dem Motorrad verbunden.

Es ist weiterhin vorgesehen, dass für die weitere, drahtlose Schnittstelle in einem Handbereich und/oder einem Handgelenksbereich der Schutzbekleidung an der Schutzbekleidung angebracht ist. Dies hat den Vorteil, dass ein Strom insbesondere im Handbereich von einem Motorrad in die Schutzbekleidung übertragen werden kann.

Die Schutzbekleidung kann auch einen Helm oder eine über einen Helm ziehbare Haube umfassen, besonders bevorzugt umfasst die Schutzbekleidung jedoch eine Motorradkombi, insbesondere eine Motorradjacke und/oder eine Motorradhose, und/oder eine Motorradweste und/oder Motorradstiefel und/oder Motorradhandschuhe.

Dabei umfasst die Leuchtfläche zumindest eine leuchtende Faser und insbesondere ist die Faser optisch an zumindest ein Leuchtelement gekoppelt. Insbesondere kann also die Leuchtfläche über eine oder mehrere leuchtende Fasern verfügen, welche in die Schutzbekleidung eingewebt sind. Dies hat den Vorteil, dass die Lichtemissionsfläche, also die Leuchtfläche, und die Lichtquelle, also das Leuchtelement, in unterschiedlichen Bereichen der Schutzbekleidung angeordnet sein können, sodass einerseits die Sichtbarkeit der Leuchtfläche optimiert werden kann und andererseits eine Verletzungsgefahr durch das Leuchtelement minimiert werden kann. Somit wird wiederum die Sicherheit des Motorradfahrers erhöht.

Hier kann vorgesehen sein, dass das und/oder ein weiteres Mittel, insbesondere eine Induktionsschleife, für die weitere drahtlose Schnittstelle auch in einem Lendenbereich und/oder einem Gesäßbereich und/oder einem Nackenbereich der Schutzbekleidung an der Schutzbekleidung angebracht ist. Dies hat den Vorteil, dass ein Strom insbesondere im Gesäßbereich von einem Motorrad in die Schutzbekleidung übertragen werden kann und/oder auch eine Art Modulsystem möglich ist, bei welchem ein Strom beispielsweise über die drahtlose Schnittstelle von einer Sitzbank eines Motorrads über den Gesäßbereich in eine Hose der Schutzbekleidung erfolgt und dann im Lendenbereich eine weitere Stromübertragung von der Hose der Schutzbekleidung in beispielsweise eine Jacke der Schutzbekleidung erfolgt und beispielsweise von dieser wiederum über einen Stromübertrag im Nackenbereich ein Helm oder ein Helmüberzug der Schutzbekleidung mit Strom versorgt wird.

In einer bevorzugten Ausführungsform ist vorgesehen, dass die zumindest eine Leuchtfläche an einem seitlichen Bereich, insbesondere an einem Oberarmbereich und/oder an einem Oberschenkelbereich, der Schutzbekleidung in diese integriert ist. Integriert ist hier bevorzugt im Sinne von "ohne Werkzeug und/oder eine teilweise Zerstörung der Schutzbekleidung nicht entfernbar" zu verstehen, umfasst jedoch auch den allgemeineren Wortsinn von "an der Schutzbekleidung angebracht". Dies hat den Vorteil, dass eine große Fläche für die Leuchtfläche zur Verfügung gestellt ist und die Sicherheit des Motorradfahrers erhöht wird, da Motorräder selbst im Allgemeinen in einem seitlichen Bereich keine Beleuchtungsfunktion aufweisen. Somit ist die Sichtbarkeit eines Motorradfahrers von der Seite erheblich verbessert.

In einer weiteren Ausführungsform der Schutzbekleidung kann vorgesehen sein, dass die Leuchtfläche an einem rückseitigen Bereich, insbesondere an einem Rücken- oder Schulterbereich, der Schutzbekleidung in diese integriert ist. Dies hat den Vorteil, dass im Vergleich zu üblichen rückseitigen Leuchten eines Motorrads wiederum die Sichtbarkeit durch eine vergrößerte Leuchtfläche erhöht wird. Insbesondere durch eine Anordnung im oberen, straßenbelagsfernen Bereich der Schutzbekleidung wird hier eine verbesserte Sichtbarkeit erzielt.

In einer vorteilhaften Ausführungsform ist vorgesehen, dass mehrere Leuchtflächen in jeweils unterschiedlichen Bereichen in die Schutzbekleidung integriert sind und die jeweiligen Leuchtflächen darauf ausgelegt sind, in voneinander verschiedenen Farben und/oder Leuchtmodi betrieben zu werden. Alternativ oder ergänzend kann vorgesehen sein, dass die Steuereinheit darauf ausgelegt ist, die jeweiligen Leuchtflächen so zu steuern, dass diese in voneinander verschiedenen Farben und/oder Leuchtmodi betrieben werden. Dies hat den Vorteil, dass die Fahrzeugbeleuchtung des Motorrads umfänglich erweitert werden kann. Insbesondere wird so eine Kopplung der Funktion der jeweiligen Leuchtfläche an unterschiedliche Bereiche der Schutzbekleidung und unterschiedliche Farben möglich, was die Aufmerksamkeit anderer Verkehrsteilnehmer auf sich zieht und die Verständlichkeit der durch die Leuchtfläche übermittelten Information erhöht.

Insbesondere kann hier vorgesehen sein, dass zumindest eine Leuchtfläche in einen, insbesondere zentralen, rückseitigen Bereich der Schutzbekleidung integriert ist, welche ausgelegt ist, mit einer Rückleuchte und/oder einer Bremsleuchte des Motorrads synchronisiert aktiviert zu werden. Alternativ oder ergänzend kann auch vorgesehen sein, dass zumindest eine Leuchtfläche in einen seitlichen Bereich der Schutzbekleidung integriert ist, welche ausgelegt ist, mit einer Blinkleuchte des Motorrads synchronisiert aktiviert zu werden. Der seitliche Bereich kann hier insbesondere auch in einem rückseitigen Bereich der Schutzbekleidung liegen. Seitlich und rückseitig ist hier ausgehend von einer Vorderseite des Fahrers, welcher in Fahrtrichtung orientiert ist, zu betrachten. Die Farben der entsprechenden Leuchtflächen sind hier insbesondere an die Farben der jeweiligen zugeordneten, also zeitgleich mit den jeweiligen Leuchtflächen aktivierten Leuchten am Motorrad angepasst. Dies hat den Vorteil, dass eine intuitiv verständliche Vergrößerung der jeweiligen Leuchten des Motorrads erzielt wird, wodurch der Motorradfahrer besonders gut sichtbar wird und seine Sicherheit erhöht wird.

In einer bevorzugten Ausführungsform ist es vorgesehen, dass die weitere, drahtlose Schnittstelle eine Induktionsschleife umfasst.

Die Erfindung umfasst auch ein Anzeigesystem mit einer Schutzbekleidung nach einer der beschriebenen Ausführungsformen und mit einem Motorrad, welches das zweite Steuergerät umfasst, wobei in zumindest einem Lenkergriff des Motorrads Mittel für eine drahtlose Energie- und/oder Datenübertragung integriert sind. Da an dem Lenker der Kontakt zwischen Schutzbekleidung und Motorrad in einem Betriebszustand des Motorrads besonders gut ausgeprägt ist, bringt dies den Vorteil mit sich, dass so besonders effektiv Strom aus dem Motorrad in die Schutzbekleidung übertragen werden kann. Insbesondere ist das zweite Steuergerät hierbei an die Motorradelektronik gekoppelt, sodass motorradinterne Signale bezüglich einer Aktivität Leuchte des Motorrads von dem zweiten Steuergerät an das erste Steuergerät übermittelt werden können. Auch können hier Zusatzfunktionen der Schutzbekleidung angesteuert werden, welche nicht zwangsläufig eine Entsprechung an dem Motorrad haben, beispielsweise kann eine stroboskopische Blaulichtfunktion der Schutzbekleidung aktiviert werden, ohne dass zwangsweise an dem Motorrad ein entsprechendes Blaulicht vorhanden sein muss.

In einer bevorzugten Ausführungsform ist hier vorgesehen, dass auch in zumindest einer Sitzfläche des Motorrads die oder weitere Mittel für eine drahtlose Energie- und/oder Datenübertragung integriert sind, insbesondere eine Induktionsschleife. Da auch an der Sitzfläche der Kontakt zwischen Schutzbekleidung und Motorrad in einem Betriebszustand des Motorrads besonders gut ausgeprägt ist, bringt dies den Vorteil mit sich, dass so besonders effektiv Strom aus dem Motorrad in die Schutzbekleidung übertragen werden kann.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine schematische Darstellung eines Motorradfahrers auf einem Motorrad, welcher mit einer ersten beispielhaften Ausführungsform der erfindungsgemäßen Schutzbekleidung ausgestattet ist, in einer Seitenansicht;
- Fig. 2: den Motorradfahrer mit der Schutzbekleidung aus Fig. 1 in einer Rückenansicht;
- Fig. 3: einen Motorradfahrer mit einer weiteren beispielhaften Ausführungsform einer erfindungsgemäßen Schutzbekleidung in einer Seitenansicht; und
- Fig. 4: den Motorradfahrer mit der Schutzbekleidung aus Fig. 3 in einer rückwärtigen Ansicht.

In den Figuren werden gleiche oder funktionsgleiche Elemente mit den gleichen Bezugszeichen versehen.

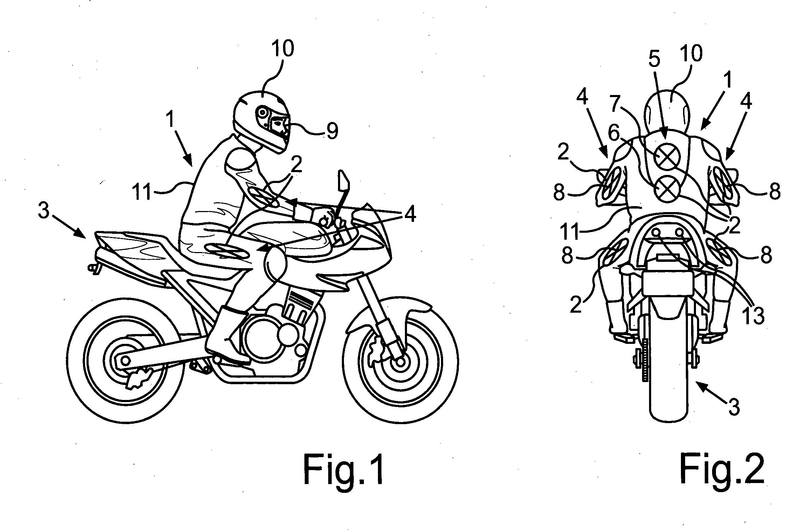

Fig. 1 zeigt einen Motorradfahrer mit einer beispielhaften Ausführungsform einer Schutzbekleidung auf einem Motorrad in einer Seitenansicht. Der Motorradfahrer 9 sitzt dabei auf dem Motorrad 3. Die Schutzbekleidung 1 weist hier zwei Leuchtflächen 2 auf, die vorliegend in einem seitlichen Bereich 4 der Schutzbekleidung 1 angebracht sind. Bei den seitlichen Bereichen 4 handelt es sich um einen Armbereich und einen Oberschenkelbereich. Im gezeigten Beispiel sind die Leuchtflächen 2 als Blinker ausgeführt.

Fährt der Motorradfahrer 9 also mit seinem Motorrad 3 auf einer Straße und möchte er beispielsweise nach rechts abbiegen, so wird er den Blinker des Motorrads 3 betätigen. Für einen Verkehrsteilnehmer, welcher sich beispielsweise von der rechten Seite des Motorrads 3 an dieses annähert, wäre das Abbiegevorhaben des Motorradfahrers 9 ohne die Schutzbekleidung 1 jedoch schwer zu erkennen, da Blinker des Motorrads 3 selber im Allgemeinen in oder entgegen der Fahrtrichtung orientiert sind. Da im gezeigten Beispiel die Schutzbekleidung 1 über eine drahtlose Schnittstelle zur Kommunikation mit einer an dem Motorrad 3 angeordneten Steuereinheit, welche Informationen über das Blinksignal des Motorrads 3 überträgt, gekoppelt ist, werden die Leuchtflächen 2 der Schutzbekleidung 1 synchron mit dem Blinker des Motorrads 3 aktiviert. Die Leuchtflächen 2 blinken also synchron mit dem Blinker des Motorrads 3, beispielsweise in der Farbe des Blinkers, also gelb. Damit ist die Absicht des Motorradfahrers 9, im vorliegenden Beispiel nach rechts abzubiegen, für einen anderen Verkehrsteilnehmer leichter zu erkennen, sodass die Sicherheit erhöht ist.

Fig. 2 zeigt den in Fig. 1 dargestellten Motorradfahrer 9 mit der Schutzbekleidung 1 in einer rückwärtigen Ansicht. Das Motorrad 3 weist hier beispielsweise eine kombinierte Rück- und Bremsleuchte 13 auf. Nicht eingezeichnet sind hier aus Gründen der Übersichtlichkeit eventuell vorhandene weitere Leuchten des Motorrads 3. Die Schutzbekleidung 1 verfügt hier über eine Vielzahl von Leuchtflächen 2. Zwei davon sind in diesem Beispiel in einem rückseitigen Bereich 5 zentral im Bereich der Wirbelsäule des Motorradfahrers 9 angeordnet. Die untere Leuchtfläche 2 stellt hier ein Rücklicht 6 dar, die obere, weiter von dem Motorrad 3 entfernte Leuchte 2 ein Bremslicht 7. Weitere Leuchtflächen 2 sind an einem seitlichen Bereich 4 der Schutzbekleidung 1 angeordnet und ebenfalls nach hinten orientiert. Dabei handelt es sich um Blinklichter 8, welche in diesem Beispiel an den Rückseiten von Oberschenkeln und Oberarmen in die Schutzbekleidung 1 integriert sind. In einer anderen Ausführungsform können auch Leuchtflächen 2 an einem seitlichen Bereich 4 der Schutzbekleidung 1 beispielsweise als Blinklichter in einem rückseitigen Wadenbereich ausgeführt sein.

Da entsprechend zu Fig. 1 die Schutzbekleidung 1 Signale bezüglich der Aktivität von Leuchten des Motorrads 3 von diesem erhält, wird ein hinter dem Motorradfahrer 9 fahrender Verkehrsteilnehmer über die Leuchtflächen 2 zusätzlich zu den hier nicht dargestellten Leuchten des Motorrads 3 über das Fahrverhalten des Motorrads 3 informiert. So wird, wenn das Betriebslicht des Motorrads 3 angeschaltet ist, auch das Rücklicht 6 der Schutzbekleidung 1 leuchten, wenn der Motorradfahrer 9 bremst auch das Bremslicht 7 aufleuchten, und auch eine Fahrtrichtungsänderungsanzeige über die in dem seitlichen Bereich 4 angeordneten Leuchtflächen 2, welche als Blinklicht 8 ausgeführt sind, erfolgen. Insgesamt steht somit eine vergrößerte Signalfläche zur Verfügung, welche für weitere Verkehrsteilnehmer besser zu erkennen ist als die Leuchten des Motorrads 3 alleine.

Im vorliegenden Beispiel wird die Stromversorgung der als Motorradkombi 11 ausgeführten Schutzbekleidung 1 über eine jeweilige Induktionsschleife in einem Handbereich oder Handgelenksbereich und im Gesäßbereich des Motorradfahrers realisiert. Es wäre hier auch möglich, über weitere Induktionsschleifen, beispielsweise im Handgelenkbereich oder im Nackenbereich, durch die Motorradkombi 11 eine Stromversorgung für weitere Elemente der Schutzbekleidung, beispielsweise Handschuhe oder einen Motorradhelm 10, zu ermöglichen. Diese weiteren Elemente der Schutzbekleidung müssten dann über entsprechend geeignete Mittel, beispielsweise weitere Induktionsschleifen, verfügen, um den Strom empfangen zu können. Dadurch ließe sich zum Beispiel eine zusätzliche Leuchtfläche, beispielsweise in dem Motorradhelm, mit Strom versorgen. Es ist beispielsweise möglich, hier über eine Induktionsschleife im Nacken, welche helmseitig ein entsprechendes Gegenstück aufweist, auf dem Motorradhelm 10 eine Leuchtfunktion zu realisieren. So ist es beispielsweise möglich, eine Blaulichtfunktion in einen Motorradhelm 10 der Schutzbekleidung 1 zu integrieren, sodass ein teurer Umbau des Motorrads 3 hier überflüssig würde. Konkret kann dies beispielsweise mittels eines elastischen Strumpfes, welcher über den Motorradhelm 10 gezogen werden kann und über entsprechende Leuchtflächen 2 verfügt, realisiert werden. Dies hat auch den Vorteil, dass aufgrund der Verformbarkeit der Leuchtfläche ein bestimmter Strumpf für mehrere unterschiedliche Helme verwendet werden kann. Auch lässt sich beispielsweise eine Alternativversorgung der Schutzbekleidung 1 mit Strom über die Lenkergriffe, welche dann ebenfalls über ein Mittel zur Stromversorgung in die Handschuhe verfügen müssten, erzielen, wenn die Handschuhe geeignete Mittel wie beispielsweise Induktionsschleifen, aufweisen.

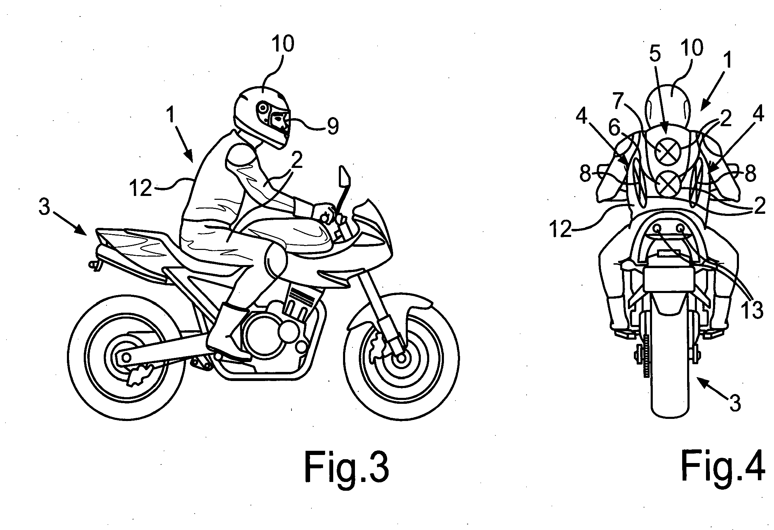

Fig. 3 zeigt einen Motorradfahrer 9 mit einer Schutzbekleidung nach einer vorliegend nicht beanspruchten weiteren beispielhaften Ausführungsform. Dabei ist die Schutzbekleidung 1 als Motorradweste 12 ausgeführt, sodass von einer Seite hier keine Leuchtflächen 2 (Fig. 1) sichtbar sind.

In Fig. 4 ist der Motorradfahrer mit der vorliegend nicht beanspruchten beispielhaften Ausführungsform der Schutzbekleidung aus Fig. 3 in einer rückwärtigen Ansicht gezeigt. Die im dargestellten Fall vier Leuchtflächen 2 sind sämtlich in dem Rückenbereich der Motorradweste 12 angeordnet. Dabei ist eine Leuchtfläche 2 als Rücklicht 6 ausgeführt und im motoradnahen unteren zentralen rückseitigen Bereich 5 angeordnet. Darüber, also im motoradfernen Schulterbereich des Motorradfahrers 9, ist ebenfalls mittig eine als Bremslicht 7 ausgeführte Leuchtfläche 2 zu sehen. In einem jeweiligen seitlichen Bereich 4 rechts und links der beiden zentralen Leuchtflächen 2, die als Bremslicht 7 und Rücklicht 6 ausgeführt sind, sind zwei weitere, vorliegend sich länglich entlang des Rückens des Motorradfahrers 9 erstreckende Leuchtflächen 2 zu sehen, welche vorliegend jeweils als Blinklicht 8 ausgeführt sind. Ähnlich dem in Fig. 2 dargestellten Ausführungsbeispiel werden also hinter dem Motorradfahrer 9 befindliche Verkehrsteilnehmer über ein Fahrverhalten bzw. eine Fahrtrichtungsänderungsabsicht des Motorradfahrers 9 zusätzlich zu den Leuchten des Motorrads 3, bspw. einer kombinierten Rück- und Bremsleuchte 13, über die Leuchtflächen 2 der Motorradweste 12 der Schutzbekleidung 1 informiert. Der Vorteil einer als Motorradweste 12 ausgeführten Schutzbekleidung 1 liegt vor allem in der freien Kombinierbarkeit mit anderen Schutzbekleidungselementen, sodass die Sicherheit des Motorradfahrers 9 kostengünstig, beispielsweise unter weiterer Verwendung einer bereits vorhandenen Motorradkombi erfolgen kann.

## Patentansprüche

1. Schutzbekleidung (1) für einen Motorradfahrer (9), mit zumindest einer lichtemittierenden Leuchtfläche (2), welche zumindest eine leuchtende Faser umfasst, und mit einer ersten Steuereinheit, die elektrisch mit der Leuchtfläche (2) gekoppelt ist, zum Steuern der Leuchtfläche (2) ausgelegt ist und über eine drahtlose Schnittstelle zur Kommunikation mit einer zweiten, an einem Motorrad (3) angeordneten Steuereinheit verfügt, wobei die erste Steuereinheit ausgelegt ist, Signale von der zweiten Steuereinheit zu empfangen, welche ein Synchronisieren einer Aktivität der Leuchtfläche (2) mit einer Aktivität zumindest einer Leuchte des Motorrads (3) ermöglichen, und die Leuchtfläche (2) den Signalen entsprechend zu steuern, wobei die Leuchtfläche (2) in die Schutzbekleidung (1) integriert ist und reversibel verformbar ausgeführt ist, wobei die Schutzbekleidung (1) über zumindest eine weitere drahtlose Schnittstelle verfügt, welche geeignet ist, einen elektrischen Versorgungsstrom zu übertragen und die Leuchtfläche (2) an eine Stromversorgung des Motorrads (3) zu koppeln,
**dadurch gekennzeichnet, dass**
ein Mittel für die weitere drahtlose Schnittstelle in einem Handbereich und/oder einem Handgelenksbereich der Schutzbekleidung (1) an der Schutzbekleidung (1) angebracht ist.

2. Schutzbekleidung (1) nach Anspruch 1,
**dadurch gekennzeichnet, dass**
die Faser optisch an zumindest ein Leuchtelement gekoppelt ist.

3. Schutzbekleidung (1) nach einem der vorhergehenden Ansprüche,
**dadurch gekennzeichnet, dass**
das Mittel für die weitere drahtlose Schnittstelle und/oder ein weiteres Mittel für die weitere drahtlose Schnittstelle auch in einem Lendenbereich und/oder Gesäßbereich und/oder Nackenbereich der Schutzbekleidung (1) an der Schutzbekleidung (1) angebracht ist.

4. Schutzbekleidung (1) nach einem der vorhergehenden Ansprüche,
**dadurch gekennzeichnet, dass**
die zumindest eine Leuchtfläche (2) an einem seitlichen Bereich (4) der Schutzbekleidung (1) in diese integriert ist.

5. Schutzbekleidung (1) nach Anspruch 4,
**dadurch gekennzeichnet, dass**
die zumindest eine Leuchtfläche (2) an einem Oberarmbereich und/oder einem Oberschenkelbereich der Schutzkleidung (1) in diese integriert ist.

6. Schutzbekleidung (1) nach einem der vorhergehenden Ansprüche,
**dadurch gekennzeichnet, dass**
die Leuchtfläche (2) an einem rückseitigen Bereich (5) der Schutzbekleidung (1) in diese integriert ist.

7. Schutzkleidung (1) nach Anspruch 6,
**dadurch gekennzeichnet, dass**
die Leuchtfläche (2) an einem zentralen Rücken- oder Schulterbereich der Schutzkleidung in diese integriert ist.

8. Schutzbekleidung (1) nach einem der vorhergehenden Ansprüche,
**dadurch gekennzeichnet, dass**
mehrere Leuchtflächen (2) in jeweils unterschiedlichen Bereichen in die Schutzbekleidung (1) integriert sind und die jeweiligen Leuchtflächen (2) darauf ausgelegt sind, in voneinander verschiedenen Farben und/oder Leuchtmodi betrieben zu werden.

9. Schutzbekleidung (1) nach einem der Ansprüche 1 bis 6,
**dadurch gekennzeichnet, dass**
die Steuereinheit darauf ausgelegt ist, die jeweiligen Leuchtflächen (2) so zu steuern, dass diese in voneinander verschiedenen Farben und/oder Leuchtmodi betrieben werden

10. Schutzbekleidung (1) nach einem der Ansprüche 8 oder 9,
**dadurch gekennzeichnet, dass**
zumindest eine Leuchtfläche (2) in einem rückseitigen Bereich (5) der Schutzbekleidung (1) integriert ist, welche ausgelegt ist, mit einer Rückleuchte und/oder einer Bremsleuchte des Motorrads (3) synchronisiert aktiviert zu werden.

11. Schutzbekleidung (1) nach einem der Ansprüche 8 bis 10,
**dadurch gekennzeichnet, dass**
zumindest eine Leuchtfläche (2) in einem seitlichen Bereich (4) der Schutzbekleidung (1) integriert ist, welche ausgelegt ist, mit einer Blinkleuchte des Motorrads (3) synchronisiert aktiviert zu werden.

12. Schutzbekleidung nach einem der vorhergehenden Ansprüche,
**dadurch gekennzeichnet, dass**
die weitere drahtlose Schnittstelle eine Induktionsschleife umfasst.

13. Anzeigesystem mit einer Schutzbekleidung (1) nach einem der vorherigen Ansprüche und mit einem Motorrad (3), welches das zweite Steuergerät umfasst,
**dadurch gekennzeichnet, dass**
in zumindest einem Lenkergriff des Motorrads (3) Mittel für eine drahtlose Energie- und/oder Datenübertragung integriert sind.

14. Anzeigesystem nach Anspruch 13,
**dadurch gekennzeichnet, dass**
auch in zumindest einer Sitzfläche des Motorrads (3) die Mittel oder weitere Mittel für eine drahtlose Energie- und/oder Datenübertragung integriert sind.

## Claims

1. Protective clothing (1) for a motorcyclist (9) having at least one light-emitting light surface (2) which includes at least one luminescent fibre, and having a first control unit which is electrically coupled with the light surface (2) and is designed to control the light surface (2) and has a wireless interface for communication with a second control unit disposed on a motorcycle (3), wherein the first control unit is configured to receive signals from the second control unit which facilitate a synchronising of an activity of the light surface (2) with an activity of at least one light of the motorcycle (3), and to control the light surface (2) corresponding to the signals, wherein the light surface (2) is integrated into the protective clothing (1) and is designed to be reversibly deformable, wherein
the protective clothing (1) has at least one further wireless interface which is suitable to transmit an electrical supply current and to couple the light surface (2) with a power supply of the motorcycle (3),
**characterised in that**
a means for the further wireless interface is installed in a hand region and/or a wrist region of the protective clothing (1) on the protective clothing (1).

2. Protective clothing (1) according to claim 1,
**characterised in that**
the fibre is coupled optically to at least one light element.

3. Protective clothing (1) according to any of the preceding claims,
**characterised in that**
the means for a further wireless interface and/or a further means for the further wireless interface is installed also in a lumbar area and/or buttocks area and/or neck area of the protective clothing (1) on the protective clothing (1).

4. Protective clothing (1) according to any of the preceding claims,
**characterised in that**
the at least one light surface (2) is integrated into the protective clothing (1) at a lateral region (4) thereof.

5. Protective clothing (1) according to claim 4,
**characterised in that**
the at least one light surface (2) is integrated into the protective clothing (1) at an upper arm region and/or an upper leg region thereof.

6. Protective clothing (1) according to any of the preceding claims,
**characterised in that**
the light surface (2) is integrated into the protective clothing (1) at a rear-side region (5) thereof.

7. Protective clothing (1) according to claim 6,
**characterised in that**
the light surface (2) is integrated into the protective clothing at a central back or shoulder region thereof.

8. Protective clothing (1) according to any of the preceding claims,
**characterised in that**
several light surfaces (2) are integrated into the protective clothing (1) in respectively different regions thereof, and the respective light surfaces (2) are designed to be operated in colours and/or lighting modes which are different from one another.

9. Protective clothing (1) according to any of claims 1 to 6
**characterised in that**
the control unit is configured to control the respective light surfaces (2) such that these are operated in colours and/or lighting modes which are different from one another.

10. Protective clothing (1) according to any of claims 8 or 9,
**characterised in that**
at least one light surface (2) is integrated into a rear-side region (5) of the protective clothing (1) and is designed to be activated synchronously with a back light and/or a brake light of the motorcycle (3).

11. Protective clothing (1) according to any of claims 8 to 10,
**characterised in that**
at least one light surface (2) is integrated in a lateral region (4) of the protective clothing (1) and is designed to be activated synchronously with a blinking light of the motorcycle (3).

12. Protective clothing according to any of the preceding claims,
**characterised in that**
the further wireless interface comprises an induction loop.

13. Display system having a protective clothing (1) according to any of the preceding claims and having a motorcycle (3) which includes the second control device,
**characterised in that**
in at least one handlebar grip of the motorcycle (3) are integrated means for a wireless energy transmission and/or data transmission.

14. Display system according to claim 13,
**characterised in that**
the means or further means for a wireless energy transmission and/or data transmission are integrated also in at least one seating surface of the motorcycle (3).

## Revendications

1. Revêtement de production (1) pour un motard (9), avec au moins une surface lumineuse (2) émettant de la lumière, qui comporte au moins une fibre lumineuse, et avec une première unité de commande qui est couplée électriquement à la surface lumineuse (2), est conçue pour la commande de la surface lumineuse (2) et dispose d'une interface sans fil pour la communication avec une seconde unité de commande agencée au niveau d'une motocyclette (3), dans lequel la première unité de commande est conçue afin de recevoir des signaux de la seconde unité de commande qui permettent une synchronisation d'une activité de la surface lumineuse (2) avec une activité au moins d'un feu de la motocyclette (3), et de commander la surface lumineuse (2) de manière à correspondre aux signaux, dans lequel la surface lumineuse (2) est intégrée dans le revêtement de protection (1) et est réalisée de manière déformable et réversible, dans lequel
le revêtement de protection (1) dispose d'au moins une autre interface sans fil qui est appropriée afin de transmettre un courant d'alimentation électrique et de coupler la surface lumineuse (2) à une alimentation de courant de la motocyclette (3),
**caractérisé en ce que**
un moyen pour l'autre interface sans fil est monté dans une zone de main et/ou une zone de poignet du revêtement de protection (1) au niveau du revêtement de protection (1).

2. Revêtement de protection (1) selon la revendication 1,
**caractérisé en ce que**
la fibre est couplée optiquement à au moins un élément lumineux.

3. Revêtement de protection (1) selon l'une des revendications précédentes,
**caractérisé en ce que**
le moyen pour l'autre interface sans fil et/ou un autre moyen pour l'autre interface sans fil est aussi monté dans une zone lombaire et/ou zone fessière et/ou zone cervicale du revêtement de protection (1) au niveau du revêtement de protection (1).

4. Revêtement de protection (1) selon l'une des revendications précédentes,
**caractérisé en ce que**
l'au moins une surface lumineuse (2) est intégrée au niveau d'une zone latérale (4) du revêtement de protection (1) dans celui-ci.

5. Revêtement de protection (1) selon la revendication 4,
**caractérisé en ce que**
l'au moins une surface lumineuse (2) est intégrée au niveau d'une zone du haut du bras et/ou une zone de cuisse du revêtement de protection (1) dans celui-ci.

6. Revêtement de protection (1) selon l'une des revendications précédentes,
**caractérisé en ce que**
la surface lumineuse (2) est intégrée au niveau d'une zone côté arrière (5) du revêtement de protection (1) dans celui-ci.

7. Revêtement de protection (1) selon la revendication 6,
**caractérisé en ce que**
la surface lumineuse (2) est intégrée au niveau d'une zone centrale du dos ou d'épaule du revêtement de protection dans celui-ci.

8. Revêtement de protection (1) selon l'une des revendications précédentes,
**caractérisé en ce que**
plusieurs surfaces lumineuses (2) sont intégrées dans différentes zones respectivement dans le revêtement de protection (1) et les surfaces lumineuses (2) respectives sont conçues afin d'être actionnées dans des couleurs et/ou modes d'éclairage différents les uns des autres.

9. Revêtement de protection (1) selon l'une des revendications 1 à 6,
**caractérisé en ce que**
l'unité de commande est conçue afin de commander les surfaces lumineuses (2) respectives de sorte que celles-ci soient actionnées dans des couleurs et/ou modes d'éclairage différents les uns des autres.

10. Revêtement de protection (1) selon l'une des revendications 8 ou 9,
**caractérisé en ce que**
au moins une surface lumineuse (2) est intégrée dans une zone côté arrière (5) du revêtement de protection (1) qui est conçue afin d'être activée de manière synchronisée avec une lampe arrière et/ou une lampe de frein de la motocyclette (3).

11. Revêtement de protection (1) selon l'une des revendications 8 à 10,
**caractérisé en ce que**
au moins une surface lumineuse (2) est intégrée dans une zone latérale (4) du revêtement de protection (1), qui est conçue afin d'être activée de manière synchronisée avec un feu clignotant de la motocyclette (3).

12. Revêtement de protection selon l'une des revendications précédentes,
**caractérisé en ce que**
l'autre interface sans fil comporte une boucle d'induction.

13. Système d'affichage avec un revêtement de protection (1) selon l'une des revendications précédentes et avec une motocyclette (3), qui comporte le second appareil de commande,
**caractérisé en ce que**
des moyens pour une transmission d'énergie et/ou de données sans fil sont intégrés dans au moins une poignée de guidon de la motocyclette (3).

14. Système d'affichage selon la revendication 13,
**caractérisé en ce que**
les moyens ou d'autres moyens pour une transmission d'énergie et/ou de données sans fil sont aussi intégrés dans au moins une surface d'assise de la motocyclette (3).
